# EUROPEAN PATENT SPECIFICATION

(11) **EP 2 166 262 B1**
(45) Date of publication and mention of the grant of the patent: **31.10.2012**
(21) Application number: 09165841.9
(22) Date of filing: 17.07.2009
(51) Int. Cl.: F16K 31/62

(54) **Pedal driving construction for pneumatic valves and the like**
Pedalantriebskonstruktion für pneumatische Ventile und dergleichen
Construction de commande par pédale de soupapes pneumatiques et similaires

(30) Priority: 22.09.2008 IT MI20080300 U
(43) Date of publication of application: 24.03.2010
(73) Proprietor: Ditta Sorba Renzo, 20058 Villasanta (Milano) (IT)
(72) Inventor: Sorba, Renzo Gaetano Maria, 20058 Villasanta (Milano)) (IT)
(74) Representative: Cicogna, Franco

(56) References cited:
- DE-A1- 19 753 947
- US-A- 2 188 258
- US-A- 2 887 122
- US-A- 3 019 810

## Description

### BACKGROUND OF THE INVENTION

The present invention relates to a pedal driving or controlling construction for pneumatic valves and the like.

As is known, for driving or controlling apparatus including micromotors and precision equipment in general, are conventionally used pedal drive units allowing an operator to easily and accurately control the working operations being carried out. A generic pedal driving construction is known from DE 197 53 947 A1.

Pneumatic pedal driving units are used in goldsmith's art, as well as in packaging and medical fields, such as in dental apparatus and the like.

Pedal drive or control units usually comprise an electromagnetic system controlling or driving a pneumatic valve.

### SUMMARY OF THE INVENTION

The aim of the present invention is to provide an improved pedal driving construction or unit for driving or controlling pneumatic valves or the like.

Within the scope of the above mentioned aim, a main object of the present invention is to provide such a pedal driving construction or unit allowing an operator to easily modify the driving characteristics thereof, by simply adjusting the pressure applied by the operator foot.

Another object of the present invention is to provide such a pedal driving construction allowing to perform, by operating a single drive assembly by a single foot, different driving operations, even of a mutually independent nature.

Another object of the present invention is to provide such a pedal driving construction which, owing to its specifically designed structural features, is very reliable and safe in operation.

Yet another object of the present invention is to provide such a pedal driving construction which can be easily made and which, moreover, is very competitive from a mere economic standpoint.

According to one aspect of the present invention, the above mentioned aim and objects, as well as yet other objects, which will become more apparent hereinafter, are achieved by a pedal driving construction for pneumatic valves or the like according to claim 1 of this application.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:

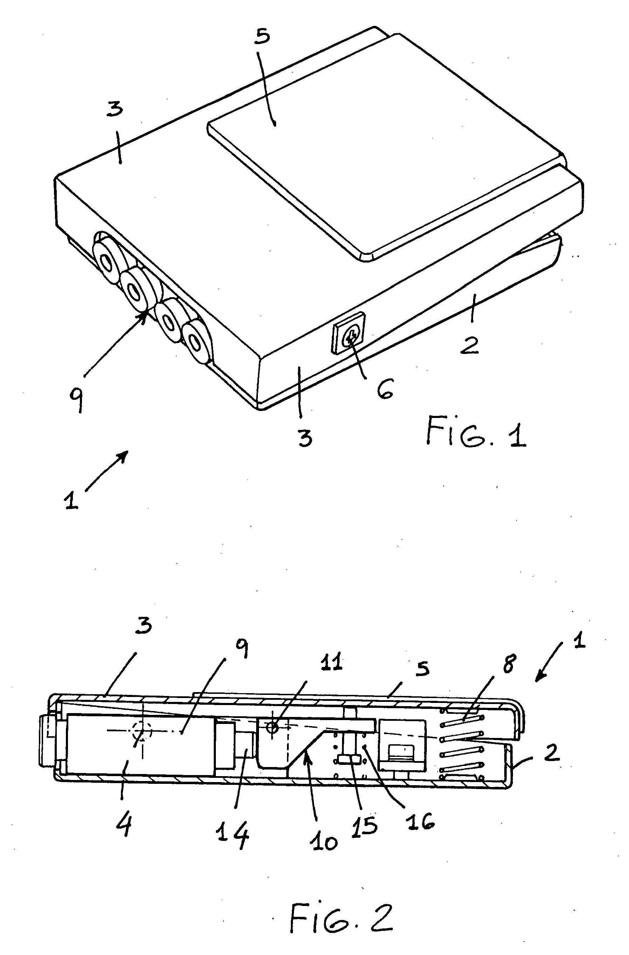

Figure 1 is a perspective view of the pedal driving construction according to the present invention;
Figure 2 is a cross-sectional elevation view of the pedal driving construction according to the invention;

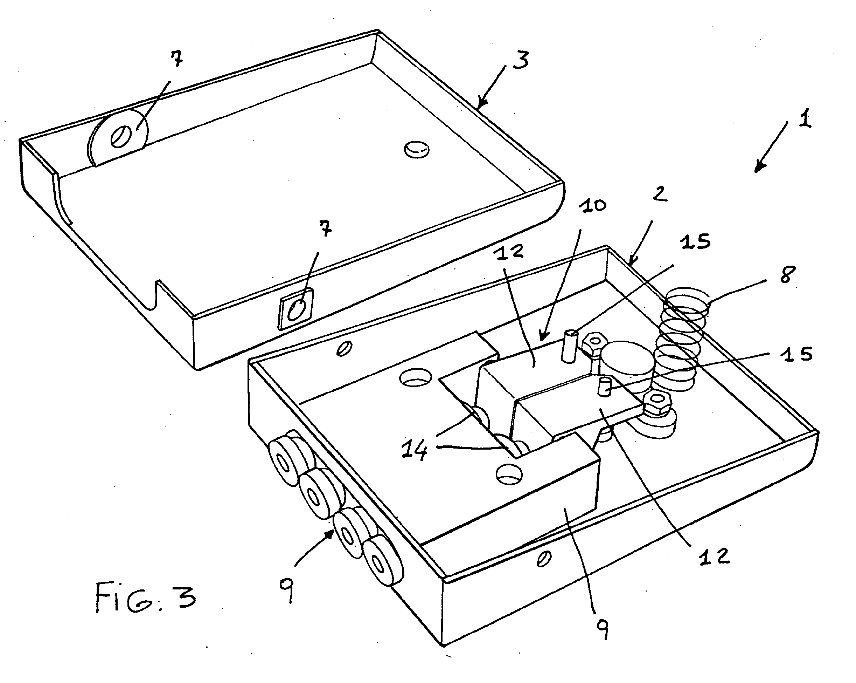

Figure 3 is a perspective view of the pedal driving construction, shown with its covering cover in an opened condition;

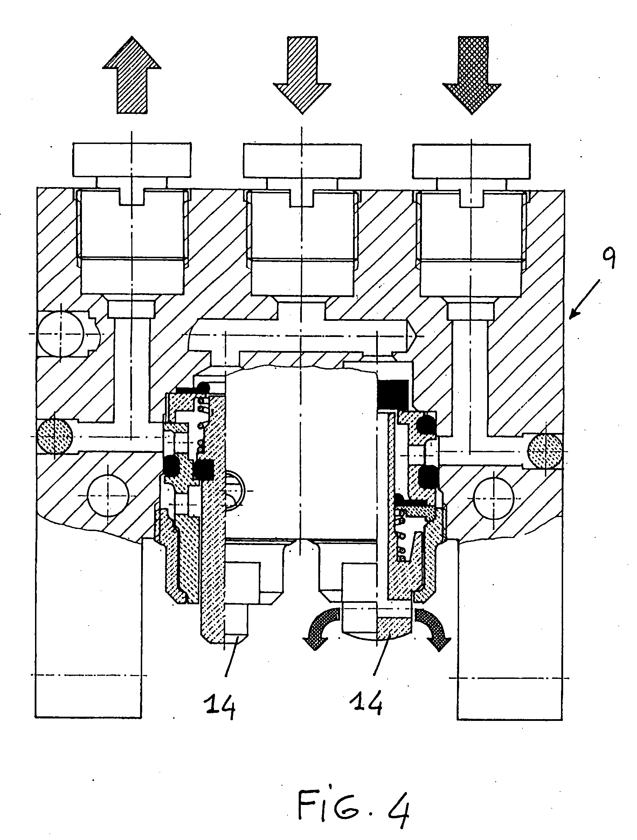

Figure 4 is a top plan cross-sectional view schematically illustrating an operating step of a microvalve;
Figure 5 is a top plan view schematically showing an application of a double-drive solenoid valve assembly; and
Figure 6 is a further top plan view, similar to figure 5, but schematically showing an application of a simple drive solenoid valve assembly.

### DESCRIPTION OF THE PREFERRED EMBODIMENT

With reference to the number references of the above mentioned figures, the pedal driving or controlling construction according to the present invention, generally indicated by the reference number 1, comprises a bottom element 2 constituted by a box-like body closed, at the top thereof, by a closing cover 3 which is pivoted to said bottom element 2 on a pivot axis 4.

The cover 3 is pivoted to said bottom element 2 by a pair of closing screws 6 engaged in anti-friction bush elements 7.

A plate-like element, constituting the pressing part of the pedal, is applied to said cover 4 which is designed for swinging with respect to the bottom element 2 against a return spring 8.

Within the bottom element 2 is arranged a valve assembly 9, including a lever means 10, pivoted to the valve body on a pivot axis 11.

Said lever means 10, which may comprise either two lever elements 12 or a single lever element 13, drives one or more driving or controlling stems or rods 14 of the valve assembly 9.

Said driving or controlling stems or rods 14 are actuated by a pressure applied by a foot on the cover 3, which in turn drives the lever means 10 through one or more adjusting screws 15.

For each lever element an adjusting screw 15 is herein provided.

To cause the lever element to perform its return movement, a further abutment spring 16 coaxial with each said adjusting screw 15 is moreover provided.

The lever means 10 adjusting screw 15 allows to precisely adjust the pedal operation, that is of the cover 3, on the driving stem 14, thereby an operator may adjust, with a very high precision, the opening or closing of the valve, without limiting this operation to a fully on or off type of operation.

Moreover, the provision of a twin element lever means, that is including two lever elements 12, allows the operator to actuate only one stem of the valve 14, with a first pedal stroke and a second stem of the valve by pressing with a greater pressing stroke said pedal.

This can be achieved by controlling the position of the adjusting screws 15, to cause one of said screws to project for a larger length than the projection length of the other screw, thereby the inner surface of the cover 3 will actuate at first the higher screw, and accordingly the lever element coupled therewith, and then the other screw, arranged at a lower level, and its lever element.

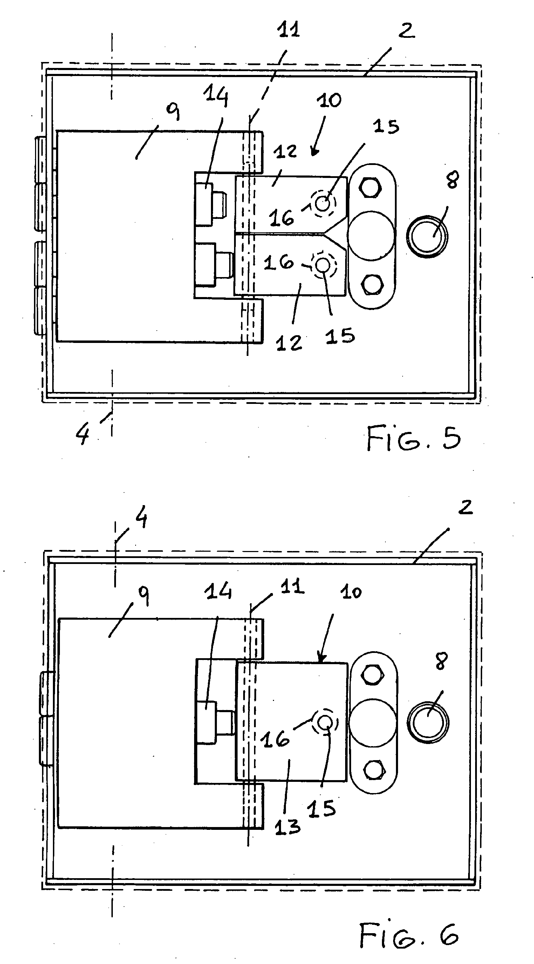

That same adjustment can be performed by providing a different extension of the valve control stem or rod, as is schematically shown in figure 5.

It has been practically found that the invention fully achieves the intended aim and objects.

In fact, the invention has provided a pedal driving construction, for pneumatic valves or the like, allowing to precisely adjust the actuating stroke of the pedal for opening or closing the valve.

The pedal driving construction according to the present invention allows moreover to differently operate the valve associated therewith, by simply adjusting the pressure applied to the pedal.

Thus, the pedal driving construction according to the invention allows an operator to control the apparatus with a very high precision and reliability, much larger than those of prior pedal control or drive units.

In practicing the invention, the used materials, as well as the contingent size and shapes, can be any, depending on requirements.

## Claims

1. A pedal driving construction (1) for pneumatic valves for controlling micromotors and precision apparatus in general, said pedal valve construction comprising a box shaped bottom element (2), closed at a top thereof by a closing cover (3) pivoted to said bottom element (2), **characterized in that** a plate element (5) forming a pressing part (5) of said pedal (3) is applied to said cover (3) which is designed for swinging with respect to said bottom element against a return spring (8), that within said bottom element is arranged a valve assembly (9) including a lever means (10) pivoted to a valve body, said valve assembly (9) including one or more valve driving stems (14), said valve driving stems (14) being driven by a pressure applied by a foot on said plate element (5) which drives said lever means (10) through one or more adjusting screws (15), said lever means comprising either two lever members or a single lever member, that each said adjusting screw (15) comprises an abutment spring coaxial with said adjusting screw, that each said lever means adjusting screw (15) allows to adjust the cover stroke on each driving stem of said valve assembly (9), and that said two element levers (10) including two adjoining lever members allow an operator to operate only a stem (14) of a valve, by a first pedal stroke and a second stem (14) of the valve by pressing with a larger pressing stroke said pedal, which can be achieved by adjusting the positions of the adjusting screws (15), thereby causing an adjusting screw (15) to project by a larger length than that of the other adjusting screw, to allow an inner surface of said cover (3) to operate at first on the higher screw, and accordingly on the lever element associated therewith, and then on the other lower screw and on the lever element of the latter.

2. A pedal driving construction, according to claim 1, **characterized in that** said cover is pivoted to said bottom element by a pair of closing screws engaged in anti-friction bush elements.

3. A pedal driving construction, according to claim 1, **characterized in that** said valve stems have a different extension.

## Patentansprüche

1. Pedalantriebskonstruktion (1) für pneumatische Ventile zum Steuern von Mikromotoren und Präzisionsvorrichtungen im Allgemeinen, wobei die Pedalantriebskonstruktion ein kastenförmiges Bodenelement (2) umfasst, das an seiner Oberseite durch eine Verschlussabdeckung (3) verschlossen ist, die schwenkbar am Bodenelement (2) angebracht ist, **dadurch gekennzeichnet, dass** ein Plattenelement (5), das ein Teil zum Drücken (5) des Pedals (1) bildet, an der Abdeckung (3) angebracht ist, die dafür gestaltet ist, im Verhältnis zum Bodenelement gegen eine Rückstellfeder (8) zu schwingen, dadurch, dass im Bodenelement eine Ventilanordnung (9) angeordnet ist, die ein Hebelmittel (10) beinhaltet, das schwenkbar an einem Ventilkörper angebracht ist, wobei die Ventilanordnung (9) einen oder mehrere Ventilantriebsschafte (14) beinhaltet, wobei die Ventilantriebsschafte (14) durch einen Druck betrieben werden, der von einem Fuß auf das Plattenelement (5) ausgeübt wird, das die Hebelmittel (10) mit Hilfe einer oder mehrerer Stellschrauben (15) antreibt, wobei das Hebelmittel entweder zwei Hebelelemente oder ein einzelnes Hebelelement umfasst, dadurch, dass jede Stellschraube (15) eine Auflagerfeder umfasst, die koaxial zu den Stellschraube ausgerichtet ist, dadurch, dass jede Hebelmittel-Stellschraube (15) das Einstellen der Einfederung der Abdeckung in jeden Ventilantriebsschaft der Ventilanordnung (9) ermöglicht, und dadurch, dass die zwei Elementhebel (10) zwei nebeneinanderliegende Hebelelemente beinhalten, die es einem Bediener ermöglichen, durch eine erste Pedaleinfederung nur einen Schaft (14) eines Ventils zu bedienen und durch Drücken mit einem größeren Einfederungsdruck auf das Pedal einen zweiten Schaft (14) des Ventils, was durch Einstellen der Positionen der Stellschrauben (15) erreicht werden kann, wodurch bewirkt wird, dass eine Stellschraube (15) weiter hervorsteht als die andere Stellschraube, um zu ermöglichen, dass eine Innenfläche der Abdeckung (3) zuerst die höhere Schraube betätigt und demzufolge das damit verbundene Hebelelement und dann die andere, tiefere Schraube und das Hebelelement Letzterer.

2. Pedalantriebskonstruktion nach Anspruch 1, **dadurch gekennzeichnet, dass** die Abdeckung durch ein Paar Verschlussfedern, die in Gleitbuchsenelemente eingreifen, schwenkbar am Bodenelement angebracht ist.

3. Pedalantriebskonstruktion nach Anspruch 1, **dadurch gekennzeichnet, dass** die Ventilantriebsschafte unterschiedliche Erstreckungen aufweisen.

## Revendications

1. Système de commande par pédale (1) destiné à des soupapes pneumatiques afin de commander des micromoteurs et des appareils de précision, en général, ledit système de soupape à pédale comprenant un élément inférieur ayant la forme d'un boîtier (2), fermé dans sa partie supérieure par un couvercle d'obturation (3) qui pivote par rapport au dit élément inférieur (2), **caractérisé en ce qu'**un élément de plaque (5) formant une partie de compression (5) de ladite pédale (1) est appliqué sur ledit couvercle (3) qui est conçu pour basculer par rapport au dit élément inférieur en s'opposant à un ressort de rappel (8), **en ce que**, à l'intérieur dudit élément inférieur est agencé un ensemble de soupape (9) incluant un moyen formant levier (10) qui pivote par rapport à un corps de soupape, ledit ensemble de soupape (9) incluant une ou plusieurs tiges de commande de soupape (14), lesdites tiges de commande de soupape (14) étant commandées par une pression appliquée par le pied sur ledit élément de plaque (5) qui commande ledit moyen formant levier (10) par l'intermédiaire d'une ou plusieurs vis de réglage (15), ledit moyen formant levier comprenant soit deux organes formant leviers, soit un organe unique formant levier, **en ce que** ladite vis de réglage (15) comprend un ressort d'appui coaxial avec ladite vis de réglage, **en ce que** ladite vis de réglage (15) du moyen formant levier permet de régler la course du couvercle sur chaque tige de commande dudit ensemble de soupape (9), et **en ce que** lesdits deux éléments de leviers (10) incluant deux organes de levier adjacents permettent à un opérateur de faire fonctionner uniquement une tige (14) d'une soupape, grâce à une première course de la pédale et une seconde tige (14) de la soupape en appuyant avec une course de pression plus importante, qui peut être réalisée en réglant les positions des vis de réglage (15), en provoquant ainsi la mise en saillie d'une vis de réglage (15) sur une longueur plus importante que celle de l'autre vis de réglage, afin de permettre à une surface interne dudit couvercle (3) d'agir en premier lieu sur la vis la plus haute, et, en conséquence, sur l'élément de levier qui lui est associé, et puis sur l'autre vis inférieure et sur l'élément de levier de cette dernière.

2. Système de commande par pédale selon la revendication 1, **caractérisé en ce que** ledit couvercle pivote par rapport au dit élément inférieur grâce à une paire de vis d'obturation engagées dans des éléments de bagues de palier antifriction.

3. Système de commande par pédale selon la revendication 1, **caractérisé en ce que** lesdites tiges de soupape ont une rallonge différente.
